# FASCICULE DE BREVET EUROPEEN

(11) **EP 2 180 436 B1**
(45) Date de publication et mention de la délivrance du brevet: **16.08.2017**
(21) Numéro de dépôt: 09172642.2
(22) Date de dépôt: 09.10.2009
(51) Int. Cl.: G06N 7/00, G06N 3/08

(54) **Système de procédé d'apprentissage semi-supervisé pour la classification de données à partir de paramètres discriminants**
System eines halbüberwachten Lernverfahrens für die Klassifizierung von Daten mit Hilfe von diskriminierenden Parametern
Semi-supervised learning method system for data classification according to discriminating parameters

(30) Priorité: 23.10.2008 FR 0857194
(43) Date de publication de la demande: 28.04.2010
(73) Titulaire: Commissariat à l'Énergie Atomique et aux Énergies Alternatives, 75015 Paris (FR)
(72) Inventeur: Gaillard, Pierre, 75015 PARIS (FR); Aupetit, Michaël, 92800 PUTEAUX (FR)
(74) Mandataire: Delumeau, François Guy

(56) Documents cités:
- US-A1- 2007 122 039
- GAILLARD ET AL: "Learning topology of a labeled data set with the supervised generative Gaussian graph" NEUROCOMPUTING, ELSEVIER SCIENCE PUBLISHERS, AMSTERDAM, NL, vol. 71, no. 7-9, 1 février 2008 (2008-02-01), pages 1283-1299, XP022560223 ISSN: 0925-2312
- ZHU X ET AL: "Semi-Supervised Learning Using Gaussian Fields and Harmonic Functions" PROCEEDINGS OF THE TWENTIETH INTERNATIONAL CONFERENCE ON MACHINE LEARNING, vol. 2, 2003, pages 912-919, XP002521819 AMERICAN ASSOCIATION FOR ARTIFICIAL INTELLIGENCE, US
- DAVID J. MILLER AND HASAN S. UYAR: "A Mixture of Experts Classifier with Learning Based on Both Labelled and Unlabelled Data" ADVANCES IN NEURAL INFORMATION PROCESSING SYSTEMS - NIPS 1996, DENVER, CO, USA, vol. 9, 2 décembre 1996 (1996-12-02), pages 571-577, XP002560954 MIT Press
- ZHU X ET AL: "Harmonic mixtures: Combining mixture models and graph-based methods for inductive and scalable semi-supervised learning" PROCEEDINGS OF THE 22ND INTERNATIONAL CONFERENCE ON MACHINE LEARNING - ICML 2005, 7 août 2005 (2005-08-07), pages 1057-1064, XP002560955 ASSOCIATION FOR COMPUTING MACHINERY, US

## Description

### Arrière-plan de l'invention

L'invention se situe dans le domaine des systèmes d'apprentissage semi-supervisé pour la classification de données.

Dans ce document, la notion de données est à comprendre au sens le plus large et peut notamment désigner des objets ou des événements.

L'invention peut notamment s'appliquer, de façon non limitative, à la reconnaissance de caractères, à la surveillance d'événements géophysiques, à la classification d'images et de sons, au contrôle de qualité d'objets ou de produits manufacturés et à la maintenance prédictive d'équipements.

On rappelle que l'apprentissage semi-supervisé se distingue de l'apprentissage supervisé en ce qu'il utilise à la fois des données étiquetées et des données non étiquetées. Pour plus de renseignements, l'homme du métier peut notamment se repérer au document Web http://en.wikipedia.org/wiki/Semi-supervised_learning.

Un procédé connu d'apprentissage semi supervisé est décrit dans l'article « Harmonic mixtures : combining mixture models and graph-based methods for inductive and scalable semi-supervised learning » de X. Zhu et J. Lafferty, publié dans le document Proceedings of the 22nd International Conference on Machine Learning, pp 1052-1059, New York, USA, 2005, ACM.

Ce procédé consiste principalement à représenter les données par un certains nombres de prototypes, étiqueter ces prototypes, créer un graphe dont les sommets sont constitués par les données et donc chaque sommet est relié par un arc à ses K plus proches voisins, pondérer ces arcs, propager les étiquettes dans le graphe en tenant compte de la pondération précitée, reporter sur les prototypes les étiquettes des données qu'ils représentent et classifier les données en fonction de l'étiquette portée par leurs prototypes après propagation.

Cette méthode présente un inconvénient majeur en ce qu'elle nécessite de paramétrer manuellement le nombre de prototypes, le paramètre K du voisinage du graphe et la pondération des arcs.

En outre, cette méthode est très sensible au bruit sur les données.

On connaît également le document Gaillard et al « Learning topology of a labeled data set with the supervised generative Gaussian graph » Neurocomputing, Elsevier Science Publishers, Amsterdam, NL, vol 17, no 7-9, 1 février 2008. Ce document décrit une méthode d'apprentissage supervisée dans lequel toutes les données sont étiquetées ; ce document ne décrit pas de méthode de classification de ces données.

On connait également le document « A mixture of experts classifier with learning based on both labelled and unlabelled data » de Miller et Uyar publié dans "Neural Information Processing Systems"; MIT PRESS en 1997*,* qui décrit un classificateur à apprentissage basé sur des données étiquetées et sur des données non étiquetées.

### Objet et résumé de l'invention

La présente invention a pour but principal de résoudre les inconvénients précités.

A cet effet l'invention concerne un procédé d'apprentissage semi-supervisé mis en oeuvre par ordinateur pour la classification de données, dont au moins certaines sont étiquetées avec une étiquette choisie parmi une pluralité de classes prédéterminées, les autres n'étant pas étiquetées, ce procédé comportant :
- une étape de construction d'un modèle local au cours de laquelle on représente chacune des données par un prototype; et
- une étape d'étiquetage de chaque prototype avec une étiquette comportant, pour chaque classe une probabilité que le prototype appartienne à cette classe ;
- une étape de définition d'un graphe génératif dont les noeuds sont constitués par les prototypes ;
- une étape d'attribution d'un poids à chacun des arcs de ce graphe, ce poids étant estimé par la densité des données autour de cet arc ;
- une étape de propagation des étiquettes dans le graphe, jusqu'à un état de convergence, la propagation d'une étiquette associée à un premier prototype vers un deuxième prototype relié audit premier prototype par un arc consistant à modifier les probabilités de l'étiquette du deuxième prototype en fonction du poids de l'arc et des probabilités de l'étiquette du premier prototype ;
- une étape de classification des données en fonction de l'étiquette des prototypes représentant ces données après la propagation, la classe des données non étiquetées étant attribuée selon la règle du maximum à postériori.

De façon très avantageuse, l'utilisation d'un graphe génératif permet une pondération automatique des arcs, c'est-à-dire sans intervention de l'utilisateur.

Un "graphe génératif" est défini dans l'article de M. Aupetit « Learning Topology with the Generative Gaussian Graph and the EM Algorithm » publié dans le document Advances in Neural Information Processing Systems 18, pages 83-90, MIT Press Cambridge MA, 2006.

Conformément à l'invention, les noeuds du graphe génératif ne sont pas constitués par les données elles-mêmes, mais par les prototypes de ces données.

Grâce à cette caractéristique, le procédé d'apprentissage est très robuste au bruit sur les données. Elle permet en outre de traiter des données incomplètes, par exemple de reconnaître des caractères incomplets, pour lesquels un ou plusieurs pixels ont été mal acquis ou perdus.

Dans un mode particulier de réalisation, le positionnement des prototypes et la pondération des arcs du graphe génératif sont optimisés en utilisant l'algorithme EM décrit dans lui-aussi dans le document précité.

L'algorithme EM est une méthode itérative non paramétrique qui permet de trouver automatiquement les paramètres d'un modèle en maximisant sa vraisemblance.

Le graphe génératif de l'invention présente ainsi l'avantage d'être optimisé par apprentissage statistique suivant le critère objectif du maximum de vraisemblance, d'être génératif et par conséquent de tenir compte du bruit dans les données, de permettre le traitement de données incomplètes, imprécises ou incertaines.

Dans le graphe ainsi obtenu, le poids d'un arc reliant deux prototypes représente la densité autour de cet arc (plus la densité est importante entre deux prototypes, plus le poids de l'arc reliant ces deux prototypes est grand).

Dans un mode particulier de réalisation, les arcs du graphe génératif sont définis par un sous-graphe de Delaunay.

Un tel graphe est un graphe non paramétrique. Son utilisation présente l'avantage, par rapport à l'art antérieur, de ne pas nécessiter de paramétrage manuel du paramètre K de voisinage.

Pour plus de renseignements sur la méthode de Delaunay, l'homme du métier peut se reporter au document "O. Okabe, B. Boots et K. Sugihara - Spatial Tessellations : concept and applications of Voronoï diagrams, John Wiley, Chichester, 1992."

Dans un mode particulier de réalisation, le nombre N de prototypes est déterminé en utilisant un modèle de mélange dont chaque composante est centrée sur un prototype et un critère statistique BIC « Bayesian Information Criterion » proposé par G. Schwartz dans l'article « Estimating the dimension of a model » publié en 1978 dans le document « The Annals of Statistics, 6(58), pages 461-464 ».

Cette caractéristique permet avantageusement d'éviter le paramétrage manuel du nombre de prototypes.

Dans un mode particulier de réalisation, on utilise un modèle de mélange gaussien.

On obtient un procédé d'apprentissage très robuste au bruit sur les données, lorsque ce bruit est de nature gaussienne.

Dans un mode particulier de réalisation, les arcs du graphe génératif sont définis par un sous-graphe (ou approximation) du graphe de Delaunay du type « Topology Representing Network » (TRN) tel que présenté dans le document de T. Martinetz et K. Schulten "Topology Representing Networks", Neural Networks Elsevier London, vol. 7 pages 507-522, 1994.

On rappelle qu'un graphe TRN connecte deux sommets, si ce sont les deux sommets les plus proches d'une donnée.

Un tel graphe présente l'avantage de se construire très rapidement et d'optimiser le temps de calcul.

Dans un mode particulier de réalisation, la modification des probabilités de l'étiquette du deuxième prototype suite à la propagation de l'étiquette du premier prototype est aussi fonction des probabilités de l'étiquette dudit deuxième prototype.

Dans un mode particulier de réalisation, les différentes étapes du procédé d'apprentissage sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'un procédé d'apprentissage tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente des chiffres manuscrits pouvant être classifiés par un procédé et un système d'apprentissage selon l'invention ;
- la figure 2 représente, sous forme d'organigramme, les principales étapes d'un procédé d'apprentissage conforme à l'invention dans un mode particulier de réalisation ;
- les figures 3A à 3C sont des graphes intermédiaires qui peuvent être utilisés par un procédé et un système d'apprentissage selon l'invention ;
- la figure 4 représente des étiquettes pouvant être utilisées dans l'invention ; et
- la figure 5 illustre les performances de l'invention.

### Description détaillée d'un mode de réalisation

La présente invention va maintenant être décrite dans le contexte de la reconnaissance de caractères, par exemple pour une application de tri automatique de courrier postal.

Par souci de simplification on se limitera à décrire le procédé pour reconnaître des chiffres 1 et 2 manuscrits par différentes personnes.

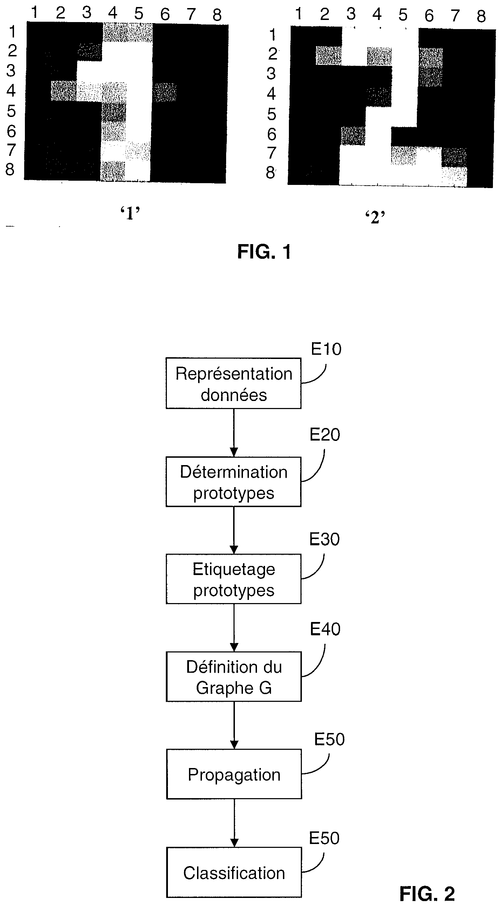

On suppose dans ce contexte que l'on dispose d'un certain nombre d'images de chiffres 1 et 2 manuscrits, tels que représentés à la **figure 1****.**

Chaque image est définie par un vecteur à M composantes (64 dans l'exemple de la figure 1) dont chaque composante représente le niveau de gris d'un pixel de l'image.

Certaines ces images sont en outre étiquetées par un utilisateur, l'étiquette comportant le chiffre « 1 » ou « 2 » reconnu par l'utilisateur.

Le procédé d'apprentissage selon l'invention vise à étiqueter les données non étiquetées, autrement dit à détecter automatiquement si une image représente un « 1 » ou un « 2 ».

La **figure 2** représente sous forme d'organigramme les principales étapes d'un procédé d'apprentissage selon l'invention.

Au cours d'une première étape E10, on représente des données étiquetées ou non par M variables, chaque variable correspondant à un pixel, dans un espace à M dimensions.

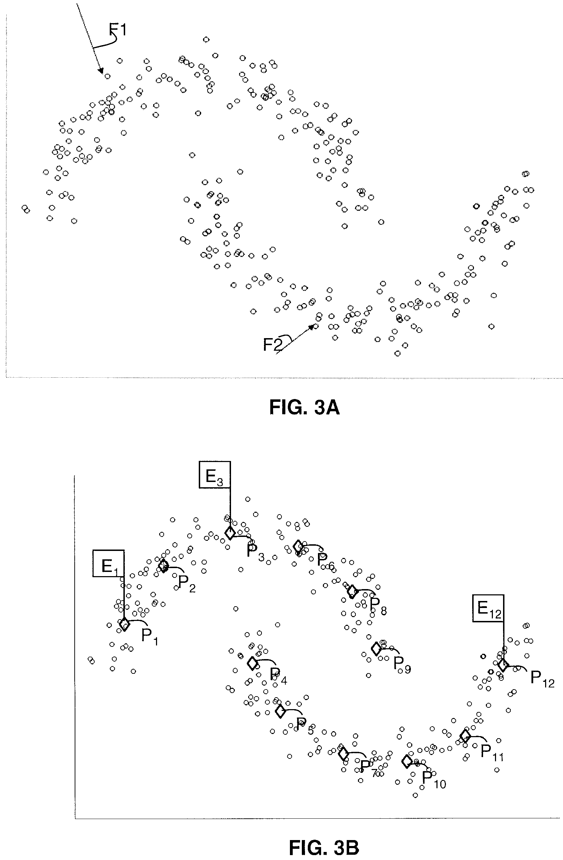

Un exemple de représentation dans un espace à 2 dimensions est donné à la **figure 3A****.** Dans cet exemple, chaque donnée Dᵢ est représentée par un cercle dans un espace E à deux dimensions.

L'invention se situe dans le domaine des procédés d'apprentissage semi-supervisé, ce qui signifie que chacune de ces données Di peut être étiquetée ou non.

Dans l'exemple décrit ici, les données Di peuvent appartenir à 2 classes possibles et on adopte la représentation graphique suivante :
- les données Di étiquetées de la première classe sont pointées par une flèche F1 ;
- les données Di étiquetées de la deuxième classe sont pointées par une flèche F2 ;
- les données non étiquetées ne sont pas pointées.

Ainsi, dans l'exemple de la figure 3A, seules deux données sont étiquetées.

L'étape E10 de représentation des données est suivie par une étape E20 de construction d'un modèle local, consistant à représenter chacune des données Dᵢ par un prototype (ou représentant) Pⱼ.

Dans l'exemple de réalisation décrit ici, les données sont expliquées localement avec un modèle de mélange gaussien proposé par D. Miller et S. Uyar dans l'article «A mixture of experts classifier with learning based on both labelled and unalabelled data», publié en 1997 dans le document "Neural Information Processing Systems ; volume 9 pages 571 à 577, MIT Press 1997.

Dans le mode de réalisation décrit ici, le nombre N de densités gaussiennes est déterminé à l'aide du critère statistique BIC.

La **figure 3B** représente le résultat de cette modélisation pour N déterminé égal à 12 par le critère BIC, chaque prototype Pⱼ étant représenté par un losange.

Le procédé selon l'invention comporte ensuite une étape E30 d'étiquetage de chacun des prototypes Pⱼ.

Sur la figure 3B, l'étiquette d'un prototype Pⱼ est référencée Eⱼ.

Dans le mode de réalisation de l'invention décrit ici, on attribue à chaque étiquette Eⱼ, et pour chaque classe possible Cₖ, une probabilité p_{j,k} que le prototype Pⱼ associé à cette étiquette Eⱼ appartienne à cette classe.

Dans l'exemple décrit ici les probabilités sont les suivantes.

| | Pⱼ,₁ | Pⱼ,₂ |
|---|---|---|
| E₁ | 0,5069 | 0,4931 |
| E₂ | 0,9854 | 0,0146 |
| E₃ | 0,5137 | 0,4863 |
| E₄ | 0,4988 | 0,5012 |
| E₅ | 0,4966 | 0,5034 |
| E₆ | 0,5001 | 0,4999 |
| E₇ | 0,0038 | 0,9962 |
| E₈ | 0,4997 | 0,5003 |
| E₉ | 0,4972 | 0,5028 |
| E₁₀ | 0,4727 | 0,5273 |
| E₁₁ | 0,4997 | 0,5003 |
| E₁₂ | 0,4999 | 0,5001 |

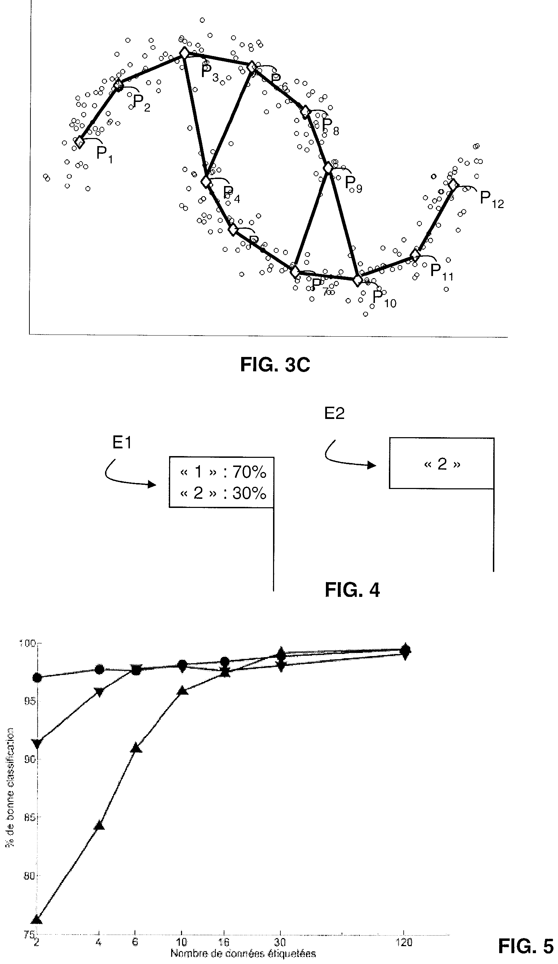

Deux étiquettes E₁, E₂ sont représentées à titre d'exemple à la **figure 4****.**

On comprend de cet exemple, que la probabilité p_{1,1} (respectivement p_{1,2}) que le prototype P₁ associé à cette étiquette E₁ appartienne à la première classe (respectivement deuxième classe) est 0,7 (respectivement 0,3).

De même, la probabilité p_{2,1} (respectivement p_{2,2}) que le prototype P₂ associé à l'étiquette E₂ appartienne à la première classe (respectivement deuxième) est 0 (respectivement 1).

Dans l'exemple de réalisation décrit ici, chaque probabilité p_{j,k} attribuée à une étiquette Eⱼ est équivalente à la proportion de données Dᵢ de la classe Cₖ par rapport à toutes les données que le prototype Pⱼ représente.

L'homme du métier peut trouver les équations de ces probabilités dans le document de D. Miller et S. Uyar précité.

L'étape E30 d'étiquetage est suivie par une étape E40 de définition d'un graphe G génératif représenté **figure 3C** dans lequel :
- les noeuds sont constitués par les prototypes Pⱼ identifiés à l'étape E20 ;
- et les arcs sont définis par un sous-graphe de Delaunay, et plus précisément par un graphe TRN.

On rappelle qu'un sous-graphe de Delaunay, comme un graphe TRN, peut être utilisé pour définir la base d'un graphe génératif, un tel graphe étant défini dans l'article de M. Aupetit « Learning Topology with the Generative Gaussian Graph and the EM Algorithm » publié dans le document Advances in Neural Information Processing Systems 18, pages 83-90, MIT Press Cambridge MA, 2006.

Dans le mode de réalisation décrit ici, les paramètres du graphe de Delaunay sont optimisés en utilisant l'algorithme EM décrit dans lui-aussi dans le document précité.

Ainsi, chaque arc A du graphe G se voit attribuer un poids W prenant en compte la densité des données autour de cet arc.

L'étape E40 de définition et de pondération du graphe G est suivie par une étape E50 de propagation des étiquettes Eⱼ des prototypes Pⱼ dans le graphe G.

Cette étape a pour objectif de combiner l'information locale contenue dans les étiquettes de prototype avec l'information globale représentée par la structure du graphe G.

Dans l'exemple de réalisation décrit ici, on utilise la propagation harmonique décrite dans l'article « Semi-supervised learning using Gaussian fields and harmonic functions » de X. Zhu, Z. Grahramani et J. Lafferty, publié dans le document Proceedings of the 20th International Conference on Machine Learning, pp 912-919 en 2003.

Dans le mode de réalisation décrit ici, la probabilité de propagation d'une étiquette Eⱼ le long d'un arc A_{j1,j2} défini par deux extrémités Pⱼ₁, Pⱼ₂ prend en compte :
- le poids W_{j1,j2} de cet arc ;
- les probabilités pⱼ,ₖ associées à cette étiquette Eⱼ pour chacune des classes Cₖ ; et
- les probabilités p_{j1,k}, p_{j2,k} associées aux étiquettes Eⱼ₁, Eⱼ₂ des extrémités Pⱼ₁, Pⱼ₂.

Cette méthode peut être vue comme le résultat d'une marche aléatoire propageant les classes à travers le graphe de telle sorte que la probabilité d'appartenance d'un prototype à une classe joue le rôle de potentiel.

Ainsi, plus un prototype à une probabilité d'appartenance à une classe Cₖ proche de 1, mieux cette classe Cₖ se propagera vers un prototype voisin dans le graphe.

Réciproquement, plus un prototype à une probabilité d'appartenance à une classe Cₖ proche de 1, moins les autres classes des prototypes voisins se propageront vers lui.

Dans l'exemple décrit ici, les probabilités, après la propagation ont évolué comme suit :

| | Pⱼ,₁ | Pⱼ,₂₀ |
|---|---|---|
| E₁ | 0,9989 | 0,0011 |
| E₂ | 0,9988 | 0,0012 |
| E₃ | 0,8728 | 0,1272 |
| E₄ | 0,2144 | 0,7856 |
| E₅ | 0,1583 | 0,8417 |
| E₆ | 0, 8261 | 0,1739 |
| E₇ | 0,0004 | 0,9996 |
| E₈ | 0,8161 | 0,1839 |
| E₉ | 0,8086 | 0,1914 |
| E₁₀ | 0,0032 | 0,9968 |
| E₁₁ | 0,0032 | 0,9968 |
| E₁₂ | 0,0032 | 0,9968 |

L'étape E50 de propagation est suivie par une étape E60 de classification des données Di en fonction de l'étiquette des prototypes Pⱼ représentant ces données après la propagation.

Dans l'exemple de réalisation décrit ici, on attribue la classe des données non étiquetées selon la règle du maximum a posteriori (classe la plus probable).

La **figure 5** permet d'illustrer les performances du procédé d'apprentissage selon l'invention, dans son application à la reconnaissance de chiffres manuscrits.

Des images normalisées au format bitmaps sont extraites à partir de chiffres manuscrits à l'aide du programme de prétraitement NIST [GARRIS 97]. Trente personnes différentes y ont contribué. Les images bitmaps de taille 32x32 sont divisées en 64 blocs de taille 4x4 sans recouvrement et le nombre de pixels blancs est compté dans chaque bloc. Cette procédure génère une matrice de taille 8x8 où chaque élément est un entier compris entre 0 et 16. A la fin, on dispose respectivement de 389 et 380 exemples de chiffres "1" et "2" représentés par 64 variables. Des exemples d'image sont donnés en figure 1.

On étiquette deux images prises aléatoirement. On utilise le procédé selon l'invention en lui fournissant en entrée ces deux images (données) étiquetées et le reste des images (767 données) sans leur étiquette :
1.1 Le système construit un modèle de mélange gaussien pour expliquer localement les données. Le nombre N de composants sélectionnés par le système à l'aide du critère BIC est 40.
1.2 Le système construit le modèle de graphe génératif pour expliquer globalement la structure des données à partir des composants déterminés à l'étape précédente.
1.3-2 Le système combine les modèles local et global à l'aide d'une marche aléatoire afin de construire un nouveau classifieur.
3 Le système classifie les données non étiquetées ayant servi à l'apprentissage et retourne la classe prédite de chaque imagette.

On compare ensuite les classes prédites par le système et les classes réelles, ce qui permet d'attribuer un pourcentage de bonne classification au système.

On répète cette procédure en augmentant progressivement le nombre de données étiquetées fournies en entrée du système. On trace, comme représenté en figure 5, les performances du procédé selon l'invention en fonction du nombre de données étiquetées.

On compare les performances du procédé selon l'invention (symboles ronds) avec deux autres méthodes :
- l'une générative qui correspond à un modèle de mélange [Miller 96] (celui obtenu à la fin de la première étape 1.1, symboles triangulaires, pointe en haut), et
- l'autre est une méthode de graphe qui propage les étiquettes disponibles au travers du graphe des plus proches voisins [Zhu03] (symboles triangulaires, pointe en bas).

Pour cette dernière, les paramètres du modèle (le degré de voisinage du graphe et la variance du noyau gaussien pondérant les liens) sont fixés par les heuristiques proposées dans [Chapelle06], puisque la validation croisée est impossible lorsque le nombre de données étiquetées est faible.

La figure 5 montre des courbes comparant les performances des différents systèmes. On constate qu'avec le procédé selon l'invention on obtient un pourcentage de bonne classification supérieure aux autres méthodes lorsque le nombre de données étiquetées est très faible.

### Références citées

### [Chapelle06]

O. Chapelle, B. Scholkopf et A. Zien, "Semi-Supervised Learning", MIT Press, Cambridge, MA 2006.

### [Garris97]

M. Garris, J. Blue, G. Candela, P. Grother, S. Janet et C. Wilson, "Nist form-based handpring recognition system (release 2.0)", 1997.

### [Miller96]

D. Miller et S. Uyar, "A generalized gaussian mixture classifier with learning based on both labelled and unlabelled data", Proceedings of the 1966 Conference on Information Science and Systems, 1996.

### [Zhu03]

X. Zhu, Z. Grahramani et J. Lafferty, "Semi-supervised learning using Gaussian fields and harmonic functions". Proceedings of the 20nd International Conference on Machine learning", pages 912-919, 2003.

## Revendications

1. Procédé d'apprentissage semi-supervisé mis en oeuvre par ordinateur pour la classification de données (Dᵢ), dont au moins certaines sont étiquetées avec une étiquette choisie parmi une pluralité de classes (Cₖ) prédéterminées, les autres n'étant pas étiquetées, ce procédé comportant :
- une étape (E20) de construction d'un modèle local au cours de laquelle on représente chacune desdites données (Dᵢ) par un prototype (Pⱼ) ;
- une étape (E30) d'étiquetage de chaque prototype (Pⱼ) avec une étiquette (Eⱼ) comportant, pour chaque classe (Cₖ) une probabilité (P_{j,k}) que ledit prototype (Pⱼ) appartienne à ladite classe (Cₖ),
- une étape (E40) de définition d'un graphe génératif (G) dont les noeuds sont constitués par lesdits prototypes (Pⱼ) ;
- une étape (E40) d'attribution d'un poids (W_{j1,j2}) à chacun des arcs (A_{j1,j2}) de ce graphe, ce poids étant estimé par la densité (d_{j1,j2}) des données autour de cet arc ;
- une étape (E50) de propagation desdites étiquettes (Eⱼ) dans le graphe (G), jusqu'à un état de convergence, la propagation d'une étiquette associée à un premier prototype (Pⱼ₁) vers un deuxième prototype (Pⱼ₂) relié audit premier prototype (Pⱼ₁) par un arc (A_{j1,j2}) consistant à modifier les probabilités de l'étiquette (Eⱼ₂) du deuxième prototype en fonction du poids (W_{j1,j2}) de l'arc et des probabilités de l'étiquette (Eⱼ₁) du premier prototype ; et
- une étape (E60) de classification desdites données (Di) en fonction de l'étiquette des prototypes représentant lesdites données après ladite propagation (E50), la classe des données non étiquetées étant attribuée selon la règle du maximum a posteriori.

2. Procédé d'apprentissage selon la revendication 1, **caractérisé en ce que** les arcs dudit graphe génératif sont définis (E40) par un sous-graphe de Delaunay.

3. Procédé d'apprentissage selon la revendication 1 ou 2, **caractérisé en ce que**, au cours de ladite étape (E20) de construction du modèle local, on utilise un modèle de mélange dont chaque composante est centrée sur un prototype et un critère statistique de type BIC (Bayesian Information Criterion) pour déterminer le nombre (N) desdits prototypes (Pⱼ).

4. Procédé d'apprentissage selon la revendication 3, **caractérisé en ce que** ledit modèle de mélange est de type gaussien.

5. Procédé d'apprentissage selon l'une quelconque des revendications 2 à 4, **caractérisé en ce que** les arcs dudit graphe génératif sont définis (E40) par un sous-graphe de graphe de Delaunay du type « Topology Representing Network ».

6. Procédé d'apprentissage selon l'une quelconque des revendications 1 à 5, **caractérisé en ce que** ladite modification de probabilités de l'étiquette dudit deuxième prototype (Pⱼ₂) suite à ladite propagation de l'étiquette dudit premier prototype (Pⱼ₁) est aussi fonction des probabilités de l'étiquette (Eⱼ₂) dudit deuxième prototype.

7. Programme d'ordinateur comportant des instructions pour l'exécution des étapes du procédé d'apprentissage selon l'une quelconque des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé d'apprentissage selon l'une quelconque des revendications 1 à 6.

9. Utilisation d'un procédé d'apprentissage selon l'une quelconque des revendications 1 à 6 pour la reconnaissance de caractères.

## Patentansprüche

1. Halbüberwachtes Lernverfahren, das von einem Computer zur Klassifikation von Daten (Dᵢ) durchgeführt wird, von denen mindestens bestimmte mit einem Kennzeichen gekennzeichnet sind, das aus mehreren vorherbestimmten Klassen (Cₖ) ausgewählt ist, wobei die anderen nicht gekennzeichnet sind, wobei das Verfahren umfasst:
- einen Schritt (E20) der Konstruktion eines lokalen Modells, während welcher jeder der Datenwerte (Dᵢ) durch einen Prototyp (Pⱼ) repräsentiert wird,
- einen Schritt (E30) der Kennzeichnung jedes Prototyps (Pⱼ) mit einem Kennzeichen (Eⱼ), das für jede Klasse (Cₖ) eine Wahrscheinlichkeit (P_{j,k}) umfasst, dass der Prototyp (Pⱼ) zu der Klasse (Cₖ) gehört,
- einen Schritt (E40) der Definition eines generativen Graphen (G), dessen Knoten durch die Prototypen (Pⱼ) dargestellt werden,
- einen Schritt (E40) der Zuordnung eines Gewichts (W_{j1,j2}) zu jedem der Bögen (A_{j1,j2}) dieses Graphen, wobei dieses Gewicht durch die Dichte (d_{j1,j2}) der Daten um diesen Bogen geschätzt wird,
- einen Schritt (E50) der Ausbreitung der Kennzeichen (Eⱼ) in dem Graphen (G) bis zu einem Konvergenzzustand, wobei die Ausbreitung eines Kennzeichnes, das mit einem ersten Prototyp (Pⱼ₁) assoziiert ist, zu einem zweiten Prototyp (Pⱼ₂), der mit dem ersten Prototyp (Pⱼ₁) durch einen Bogen (A_{j1,j2}) verbunden ist, darin besteht, die Wahrscheinlichkeiten des Kennzeichens (Eⱼ₂) des zweiten Prototyps als Funktion des Gewichts (W_{j1,j2}) des Bogens und die Wahrscheinlichkeiten des Kennzeichens (Eⱼ₁) des ersten Prototyps zu modifizieren, und
- einen Schritt (E60) der Klassifikation der Daten (Dᵢ) als Funktion des Kennzeichens der Prototypen, welche die Daten nach der Ausbreitung (E50) repräsentieren, wobei die Klasse der nicht gekennzeichneten Daten gemäß der Maximum-a-posteriori-Regel zugeordnet wird.

2. Lernverfahren gemäß Anspruch 1, **dadurch gekennzeichnet, dass** die Bögen des generativen Graphen durch einen Delaunay-Subgraphen definiert werden (E40).

3. Lernverfahren gemäß Anspruch 1 oder 2, **dadurch gekennzeichnet, dass** während des Schritts (E20) der Konstruktion des lokalen Modells ein Mischmodell verwendet wird, von dem jede Komponente auf einem Prototyp und einem statistischen Kriterium vom Typ BIC (Bayessches Informationskriterium) zentriert ist, um die Anzahl (N) der Prototypen (Pⱼ) zu bestimmen.

4. Lernverfahren gemäß Anspruch 3, **dadurch gekennzeichnet, dass** das Mischmodell vom Gaußschen Typ ist.

5. Lernverfahren gemäß einem der Ansprüche 2 bis 4, **dadurch gekennzeichnet, dass** die Bögen des generativen Graphen durch einen Subgraphen des Delaunay-Graphen vom Typ "Topology Representing Network" definiert werden (E40).

6. Lernverfahren gemäß einem der Ansprüche 1 bis 5, **dadurch gekennzeichnet, dass** die Modifikation der Wahrscheinlichkeiten des Kennzeichens des zweiten Prototyps (Pⱼ₂) nach der Ausbreitung des Kennzeichens durch den ersten Prototyp (Pⱼ₁) auch eine Funktion der Wahrscheinlichkeiten des Kennzeichens (Eⱼ₂) des zweiten Prototyps ist.

7. Computerprogramm, umfassend Instruktionen zur Ausführung der Schritte des Lernverfahrens gemäß einem der Ansprüche 1 bis 6, wenn das Programm von einem Computer ausgeführt wird.

8. Computerlesbares Aufzeichnungsmedium, auf welchem ein Computerprogramm aufgezeichnet ist, das Instruktionen zur Ausführung der Schritte des Lernverfahrens gemäß einem der Ansprüche 1 bis 6 umfasst.

9. Verwendung eines Lernverfahrens gemäß einem der Ansprüche 1 bis 6, zur Erkennung von Zeichen.

## Claims

1. A semi-supervised learning process applied by a computer for classifying data (Dᵢ), at least some of them are labeled with a label selected from among a plurality of predetermined classes (Cₓ), the other ones not being labeled, this method including:
- a step (E20) for building a local model during which each of said data (Dᵢ) is represented by a prototype (Pⱼ);
- a step (E30) for labeling each prototype (Pⱼ) with a label (Eⱼ) including, for each class (Cₖ), a probability (P_{j,k}) that said prototype (Pⱼ) belongs to said class (Cₖ),
- a step (E40) for defining a generative graph (G), the nodes of which are formed by said prototypes (Pⱼ);
- a step (E40) for assigning a weight (W_{j1,j2}) to each of the arches (A_{j1,j2}) of this graph, this weight being estimated by the density (d_{j1,j2}) of the data around this arch;
- a step (E50) for propagating said labels (Eⱼ) in the graph (G), until a convergence state, the propagation of a label associated with a first prototype (Pⱼ₁) towards a second prototype (Pⱼ₂) connected to said first prototype (Pⱼ₁) through an arch (A_{j1,j2}) consisting of modifying the probabilities of the label (Eⱼ₂) of the second prototype according to the weight (W_{j1,j2}) of the arch and to the probabilities of the label (Eⱼ₁) of the first prototype; and
- a step (E60) for classifying said data (Dᵢ) according to the label of the prototypes representing said data after said propagation (E50), the class of the unlabeled data being assigned according to the maximum a priori rule.

2. The learning process according to claim 1, **characterized in that** the arches of said generative graph (E40) are defined by a Delaunay sub-graph.

3. The learning process according to claim 1 or 2, **characterized in that**, during said step (E20) for building the local model, a mixing module is used for which each component is centered on a prototype and a statistical criterion of the BIC (Bayesian Information Criterion) type for determining the number (N) of said prototypes (Pⱼ).

4. The learning process according to claim 3, **characterized in that** the mixing module is of the Gaussian type.

5. The learning process according to any of claims 2 to 4, **characterized in that** the arches of said generative graph are defined (E40) by a Delaunay graph sub-graph of the « Topology Representing Network » type.

6. The learning process according to any of claims 1 to 5, **characterized in that** said modification of probabilities of the label of said second prototype (Pⱼ₂) following said propagation of the label of said first prototype (Pⱼ₁) also depends on the probabilities of the label (Eⱼ₂) of said second prototype.

7. A computer program including instructions for executing the steps of the learning process according to any of claims 1 to 6, when said program is executed by a computer.

8. A computer-legible recording medium on which a computer program has been recorded, comprising instructions for executing steps of the learning process according to any of claims 1 to 6.

9. The use of a learning process according to any of claims 1 to 6, for recognizing characters.
